(19) Europäisches Patentamt
European Patent Office
Office européen des brevets

(11) EP 0 492 167 B1

(12) EUROPEAN PATENT SPECIFICATION

(45) Date of publication and mention of the grant of the patent:
29.01.1997 Bulletin 1997/05

(51) Int. Cl.[6]: B01D 53/50

(21) Application number: 91120292.7

(22) Date of filing: 27.11.1991

# (54) Apparatus for desulfurizing exhaust gas

Vorrichtung zum Entschwefeln von Abgas

Dispositif pour la désulfurisation de gas d'échappement

(84) Designated Contracting States:
AT DE

(30) Priority: 28.11.1990 JP 322424/90
21.05.1991 JP 115954/91
04.07.1991 JP 164380/91
13.08.1991 JP 202767/91
10.09.1991 JP 230065/91

(43) Date of publication of application:
01.07.1992 Bulletin 1992/27

(60) Divisional application: 94114112.9
94114153.3

(73) Proprietor: MITSUBISHI JUKOGYO KABUSHIKI KAISHA
Tokyo (JP)

(72) Inventors:
- Ichinose, Toshimitsu, c/o Nagasaki Technical Inst. Nagasaki-shi, Nagaski-ken (JP)
- Tokuda, Kımishiro, c/o Nagasaki Technical Inst. Nagasaki-shi, Nagaski-ken (JP)
- Kai, Shoichi, c/o Nagasaki Technical Inst. Nagasaki-shi, Nagaski-ken (JP)
- Kawashima, Hachiro, c/o Nagasaki Technical Inst. Nagasaki-shi, Nagaski-ken (JP)
- Fujioka, Yuichi, c/o Nagasaki Technical Inst. Nagasaki-shi, Nagaski-ken (JP)
- Nakashima, Fumiya, c/o Mitsubishi Jukogyo K.K. Chiyoda-ku, Tokyo (JP)

(74) Representative: Henkel, Feiler, Hänzel & Partner
Möhlstrasse 37
81675 München (DE)

(56) References cited:

| | |
|---|---|
| EP-A- 0 128 589 | EP-A- 0 244 346 |
| EP-A- 0 301 272 | WO-A-91/02583 |
| DE-A- 2 716 329 | DE-A- 3 308 927 |
| DE-A- 3 326 832 | DE-A- 3 334 106 |
| DE-A- 3 428 502 | DE-A- 3 636 554 |
| US-A- 4 587 112 | US-A- 4 670 238 |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Rank Xerox (UK) Business Services
2.13.13/3.4

## Description

BACKGROUND OF THE INVENTION:

Field of the Invention:

The present invention relates to a desulfurizing apparatus for exhaust gas of boilers for use in electric power generation plant or in industry plant.

Description of the Prior Art:

A desulfurizing method and a desulfurizing apparatus for combustion exhaust gas of a combustion furnace in a boiler or the like in the prior art, is shown in Fig. 13.

In this figure, pulverized coal 11 and pulverized limestone ($CaCO_3$) 12 are fed to a combustion furnace 10, and desulfurization within furnace is carried out. $SO_x$ component in the combustion gas exhausted from the combustion furnace 10 is further desulfurized in a desulfurizing flue 20 in which slurry 21 is sprayed. This slurry 21 is produced by mixing a part 31 of fly ash collected from the combustion gas exhausted from the desulfurizing flue 20 by means of an electrostatic precipitator (hereinafter called EP) 30 with water 32 in a mixing machine 40.

In the slurry 21 produced by mixing the fly ash collected by means of the EP 30 with water is contained $Ca(OH)_2$ produced from the limestone fed into the combustion furnace 10, and through the following reaction, desulfurization of combustion gas in the desulfurizing flue 20 is effected by the slurry 21:

$$Ca(OH)_2 + SO_2 + 1/2\ O_2 \rightarrow CaSO_4 + H_2O$$

In these desulfurizing method and desulfurizing apparatus in the prior art, in order to operate EP 30 stably, gas temperatures at an inlet and an outlet of the desulfurizing flue 20 are set at temperatures sufficiently higher than a saturation temperature.

The remainder 33 of the fly ash collected in the EP 30 is subjected to predetermined treatment as EP ash. Also, the gas having dust such as the fly ash and the like removed in the EP 30 is released to the atmosphere through a stack 50.

The furnace desulfurization by means of limestone 12 in the above-described combustion furnace 10 is carried out as represented by the following formulae:

$$CaCO_3 \rightarrow CaO + CO_2$$

$$CaO + SO_2 + 1/2\ O_2 \rightarrow CaSO_4$$

In addition, the desulfurization by means of slurry in the above-mentioned desulfurizing flue 20 is carried out as represented by the following formulae:

$$CaO + H_2O \rightarrow Ca(OH)_2$$

$$Ca(OH)_2 + SO_2 + 1/2\ O_2 \rightarrow CaSO_4 + H_2O$$

However, in the above-described desulfurizing method and apparatus in the prior art, a desulfurization rate in the desulfurizing flue 20 is poor. Desulfurization here is the more effective, the lower a gas temperature is as shown in Fig. 1.

It is to be noted that in Fig. 1, curve $(Ca/S)_1$ shows the case where unreacted CaO is present in a large amount as compared to the case represented by curve $(Ca/S)_2$.

However, taking into consideration a stable operation in the EP 30 in the next step of the process, the gas temperature cannot be largely lowered in order to avoid inconveniences such as a sticky condition caused by moisture, and hence, a desulfurization rate in the desulfurizing flue 20 could not be raised.

In addition, in the desulfurizing flue 20, unreacted quick lime (CaO) after desulfurization has been once carried out within the combustion furnace, is utilized, this is converted into slurry and desulfurization through a gas/liquid reaction is effected, but since the quick lime converted into slurry has a very poor reactivity of desulfurization as CaO because its partial takes the state where pure CaO is surrounded by $CaSO_4$ of the reaction product.

At the time of the above-described desulfurization in the prior art, while desulfurization based on the reaction of:

$$SO_2 + Ca(OH)_2 + 1/2\ O_2 \rightarrow CaSO_4 + H_2O$$

is effected in the desulfurizing flue 20 as described above when a temperature is sufficiently high, at a temperature of about 60°C - 80°C calcium sulfite ($CaSO_3$) is produced through the following reaction:

$$SO_2 + Ca(OH)_2 \rightarrow CaSO_3 + H_2O$$

Though this $CaSO_3$ is collected in the EP 30, it has the following characteristics:

(a) This $CaSO_3$ (solid) having once finished reaction, is stable and cannot be simply oxidized into $CaSO_4$ (gypsum, publicly harmless product).
(b) $CaSO_3$ is substance concerned in COD (Chemical Oxygen Demand) public pollution, and so it cannot be subjected to a simple disposal treatment.

Accordingly, the ashes 31 and 33 collected in the EP 30 would contain $CaSO_3$ of the public pollution component.

SUMMARY OF THE INVENTION:

Another object of the present invention is to provide an apparatus for desulfurizing exhaust gas which can resolve the above-mentioned problems in the prior art.

According to a first feature of the present invention, there is provided an apparatus for desulfurizing exhaust gas comprising a combustion furnace in which desulfurization of combustion gas is carried out by making use of limestone as a desulfurizing agent, and desulfurization of exhaust gas exhausted from the combustion furnace is effected in a desulfurizing flue on the upstream side of a dust precipitator by means of slurry of unreacted quick lime contained in the exhaust gas and collected by the dust precipitator, characterized in that the aforementioned desulfurizing flue is constituted of a rotary type desulfurizing flue including a wet type grinding section for grinding, under addition of water, unreacted quick lime collected by the dust precipitator whereby calcium sulfate is removed from the calcium oxide particles, and then a quick lime slurry is formed, and a gas/liquid desulfurizing section making use of the above-mentioned quick lime slurry, and there are provided a gas/gas heater, to which exhaust gas fed from the desulfurizing flue to the aforementioned dust precipitator and exhaust gas fed from the combustion furnace to the above-mentioned desulfurizing flue are introduced, so that heat-exchange may be effected between the respective exhaust gases, and

a flue evaporator (80) downstream of the heater (60), in which part of the slurry exhausted from the desulfurizing flue (70) is evaporated using exhaust gas heat-exchanged in the heater (60).

In the apparatus according to the first feature of the present invention, since the exhaust gas fed to a desulfurizing flue from a combustion furnace has its temperature lowered in a gas/gas heater by carrying out heat-exchange with the exhaust gas having its temperature lowered as a result of treatment by quick lime slurry in the desulfurizing flue, a desulfurization efficiency by quick lime slurry in the desulfurizing flue is improved.

On the other hand, owing to the fact that the exhaust gas coming out of the desulfurizing flue is fed to a dust precipitator after its temperature was raised by carrying out heat-exchange in the above-described gas/gas heater with high-temperature exhaust gas coming out of the combustion furnace, a sticky condition due to moisture would not occur, and the dust precipitator can be operated stably.

In addition, when the unreacted quick lime in the exhaust gas collected by the dust precipitator is ground into slurry by the wet type grinding section of the rotary type desulfurizing flue, $CaSO_4$ surrounding the surfaces of quick lime particles is ground and removed from the surfaces of quick lime particles, and so, desulfurizing reaction by quick lime is improved.

Furthermore, in the gas/liquid desulfurizing section of the rotary type desulfurizing flue, a gas/liquid contact efficiency between the limestone slurry and the exhaust gas becomes high owing to the rotation of the gas/liquid desulfurizing section, and so, a desulfurizing efficiency is improved.

The above-mentioned and other objects, features and advantages of the present invention will become more apparent by reference to the following description of preferred embodiments of the invention taken in conjunction with the accompanying drawings.

## BRIEF DESCRIPTION OF THE DRAWINGS:

In the accompanying drawings:

Fig. 1 is a diagram showing relations between a combustion gas temperature and a flue desulfurization efficiency in a desulfurizing flue;

Fig. 2 is a system diagram of a third preferred embodiment of the present invention;

Fig. 3 is a vertical cross-section view of a rotary type desulfurizing flue in the third preferred embodiment;

Fig. 4 is another vertical cross-section view taken along line III-III in Fig. 2 as viewed in the direction of arrows;

Fig. 5 is a schematic perspective view of an outlet portion of a desulfurizing chamber of the rotary type desulfurizing flue in the third preferred embodiment;

Fig. 6 is a diagram showing the advantage of the third preferred embodiment;

and

Fig. 7 is a system diagram showing a desulfurizing method and a desulfurizing apparatus for exhaust gas in the prior art.

## DESCRIPTION OF THE PREFERRED EMBODIMENTS:

A preferred embodiment of the present invention will be described with reference to Figs. 2 to 5.

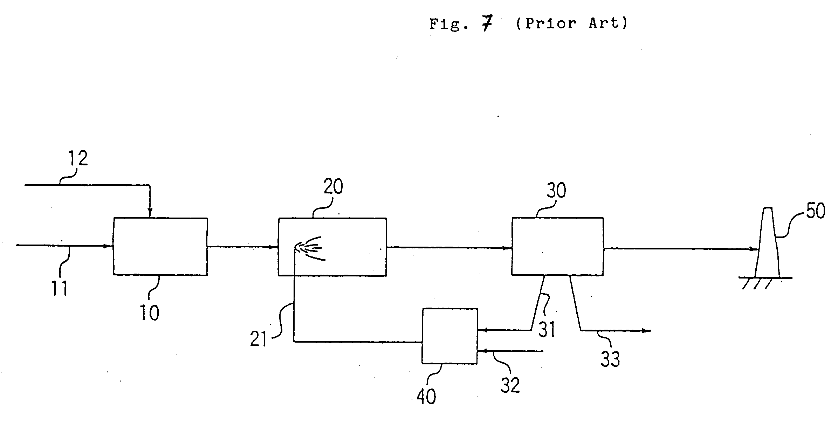

This preferred embodiment is constituted by adding the devices as will be explained in the following, to the desulfurizing apparatus in the prior art shown in Fig. 7, and component parts in Figs. 2 to 5 corresponding to those shown in Fig. 7 are given like reference numerals.

In this preferred embodiment, as shown in Fig. 2, a desulfurizing flue 70 fed with exhaust gas 13 from a combustion furnace 10 is formed in a rotary type, and the exhaust gas 13 exhausted from the combustion furnace 10 is adapted to be fed to the desulfurizing flue 70 after it passed through a gas/gas heater 60. Also, exhaust gas 61 exhausted from the desulfurizing flue 70 is adapted to be fed to an EP (electrostatic precipitator) 30 via a flue evaporator 80 after it passed through the gas/gas heater 60 and here carried out heat-exchange with the exhaust gas 13 exhausted from the combustion furnace 10.

As shown in Figs. 3 and 4, the rotary type desulfurizing flue 70 is formed in a cylindrical shape, shafts 111 at its opposite end portions are rotatably supported by frames 109, and one of the shafts 111 is coupled to a motor 110 to be rotationally driven by the motor 110.

The inside of the desulfurizing flue 70 is partitioned by an annular partition plate 104 to a wet type grinding chamber 101 and a desulfurizing chamber 102 where gas/liquid contact is effected. Within the grinding chamber 101 are accommodated a large number of balls 103 for grinding limestone. In addition, within the desulfurizing chamber 102 are provided a plurality of rod-shaped lattices 105 extending in the axial direction of the desulfurizing flue 70, and on the inner circumference of the same desulfurizing chamber 102 are provided a plurality of scraper plates 106. The above-mentioned plurality of lattices 105 are connected to one another by means of a plurality of connecting rods 105a crossing at right angles with the same lattices 105.

As shown in Fig. 5, at an end portion on the side of the desulfurizing chamber 102 of the above-mentioned desulfurizing flue 70, a pair of discs 108a and 108b rotating jointly with the desulfurizing flue 70 are mounted at an interval from each other so as to be rotatable about the shaft 111 of the desulfurizing flue 70, and between the both discs 108a and 108b is provided an annular guide cylinder 110 kept in contact with the both discs 108a and 108b concentrically with the both discs 108a and 108b. Within the above-mentioned guide cylinder 110 is slidably inserted an annular opening portion 102a of the desulfurizing flue 70, and at the top of the guide cylinder 110 is provided an exhaust hole 112 of exhaust gas, while at the bottom of the same is provided a slurry exhaust hole 113.

The above described exhaust hole 112 of exhaust gas is connected to the above-described gas/gas heater 60, while the above-mentioned slurry exhaust hole 113 is connected to a pump 120, a part 63 of the slurry exhausted from the slurry exhaust hole 113 is sprayed into the flue evaporator 80, the remainder of the slurry is adapted to be fed to the grinding chamber 101 of the desulfurizing flue 70 as circulating slurry as will be described later.

At the end portion on the side of the grinding chamber 101 of the desulfurizing flue 70 is provided an annular inlet opening 101a, and a piping 107 for introducing the exhaust gas 13 exhausted from the gas/gas heater 60 is disposed so as to surround this inlet opening 101a. The above-described piping 107 is adapted to be fed with a part 31 of the dust collected in the EP 30, water 32 and the circulating slurry 62 exhausted from the above-mentioned slurry exhaust hole 113.

In this preferred embodiment, the exhaust gas 13 subjected to furnace desulfurization by pulverized coal 11 and limestone 12 fed to the combustion furnace 10, is cooled by exhaust gas 61 coming out of a rotary type desulfurizing flue 70 which will be described later up to the proximity of a saturation temperature in the gas/gas heater 60, and this cooled gas 71 is led to the rotary type desulfurizing flue 70. Into the same rotary type desulfurizing flue 70 are fed water 32 for producing slurry, a part 31 of the dust fed from the EP 30 and the circulating slurry 62 together with this cooled gas 71. The exhaust gas 61 desulfurized in the rotary type desulfurizing flue 70 as will be described later, is heated in the above-described gas/gas heater 60 and then led to the flue evaporator 80. In the same flue evaporator 80, a part 63 of the slurry exhausted from the rotary type desulfurizing flue 70 is sprayed and evaporated. Thereafter, the exhaust gas is introduced into the EP, in which dust is collected, a part 31 of the dust is fed to the rotary type desulfurizing flue 70 and the remainder 33 is exhausted to the outside of the system.

The rotary type desulfurizing flue 70 is generally divided into a grinding chamber 101 for dust slurry containing quick lime (CaO) and a desulfurizing chamber 102 as described previously. Within the grinding chamber 101 are accommodated a large number of bales 103 for use in grinding, and the above-described water 32, the dust 31 sent from the EP 30 and the circulating slurry 62 are fed to the grinding chamber 101. These water 32, dust 31 and circulating slurry 62 are converted into slurry by rolling motions of the balls 103 caused by rotation of the rotary type desulfurizing flue 70, also $CaSO_4$ is removed from the surfaces of the CaO particles, and the slurry becomes quick lime slurry which can effect desulfurizing reaction at a high efficiency.

Among this slurry, only the part overflowing the partition plate 104 can enter the desulfurizing chamber 102 pertinent to the next step of the process. In the desulfurizing chamber 102, as a result of rotation of the rotary type desulfurizing flue 70, slurry at the bottom portion is scraped up by the lattices 105, slurry carried up to the top portion by the scraper plates 106 would flow along the lattices 105 or would adhere to the same lattices 105. Since the exhaust gas 13 exhausted from the combustion furnace 10 and containing $SO_x$ passes through the rotary type desulfurizing flue 70 under the above-mentioned condition, a gas/liquid contact efficiency becomes good, also since $CaSO_4$ has been removed from the surfaces of the quick lime particles in the slurry as described above, and since the exhaust gas 13 was cooled by the gas/gas heater 60 and has its temperature lowered, a desulfurization rate of the exhaust gas is improved.

In this way, the exhaust gas 13 is efficiently desulfurized within the desulfurizing chamber 102, also it is lowered in temperature by contact with the slurry. The exhaust gas 61 enters the gas/gas heater 60 through the opening portion 102a at the end of the desulfurizing chamber 102, the guide cylinder 110, and the exhaust gas hole 112 of the same guide cylinder 110, and performs heat-exchange with the exhaust gas 13 exhausted from the combustion furnace 10 to lower the temperature of the same exhaust gas 13, and also its temperature rises.

On the other hand, the slurry reacted with the exhaust gas 13 within the desulfurizing chamber 102 passes through the opening portion 102a at the end of the desulfurizing chamber 102, the guide cylinder 110 and the slurry exhaust hole 113 of the same guide cylinder 110, and as described above, a part 63 of the slurry is sprayed within the flue evaporator 80 by means of a pump 120, and the remaining slurry is circulated to the grinding chamber 101 as circulating slurry 62.

As described above, the exhaust gas 61 having its temperature raised in the gas/gas heater 60 is introduced into the EP 30 under a high-temperature condition after it has evaporated the above-mentioned part 63 of slurry sprayed within the desulfurizing evaporator 80. Thereby, occurrence of a sticky condition caused by moisture would not be generated, and the EP 30 can be operated stably.

In Fig. 6 is shown relations between a desulfurization efficiency by means of limestone slurry in the desulfurizing flue and a temperature difference between an outlet temperature of the exhaust gas of the desulfurizing flue and a saturation temperature. In this preferred embodiment, as shown in Fig. 6, by bringing the exhaust gas temperature close to a saturation temperature, a desulfurization efficiency in the desulfurizing flue can be greatly raised. In this figure, curve A represents the relation in the case where slurry containing a larger amount of unreacted CaO as compared to the case represented by curve B.

As described above, in this preferred embodiment, since the exhaust gas 13 coming out of the combustion furnace 10 and having its temperature lowered in the gas/gas heater 60 is fed to the rotary type desulfurizing flue 70, desulfurization at a high efficiency can be carried out by means of quick lime within the same desulfurizing flue 70.

Also, in the grinding chamber 101 of the rotary type desulfurizing flue 70, by grinding quick lime particles contained in the ash collected in the EP 30, $CaSO_4$ on the surfaces of the particles is removed, and at the same time, desulfurization of the exhaust gas 13 at a high efficiency is effected by gas/liquid contact between the limestone slurry and the exhaust gas in the desulfurizing chamber 102.

Furthermore, owing to the fact that the exhaust gas 61 having its temperature lowered by being desulfurized in the above-described manner within the rotary type desulfurizing flue 70, is fed to the EP 30 via the flue evaporator 80 after its temperature was raised by the exhaust gas 13 coming out of the combustion furnace 10 in the gas/gas heater 60, occurrence of a sticky condition would not be generated and the EP 30 can be operated stably.

It is to be noted that while the EP 30 is employed in this preferred embodiment, in place of this member, a cyclone, a bag filter or the like can be employed.

In the apparatus for desulfurizing exhaust gas according to the present invention, a desulfurization rate can be made high, owing to the fact after a temperature of the exhaust gas in the desulfurizing flue was lowered, desulfurization is carried out in the same desulfurizing flue by means of slurry consisting of an ash component collected in the dust precipitator, and an overall desulfurization rate of the exhaust gas can be made very high. In addition, by the improvement of the desulfurization rate, an amount of consumption of limestone can be made small.

In addition, owing to the fact that the exhaust gas coming out of the desulfurizing flue is introduced into the dust precipitator after it was heated in the gas/gas heater, the dust precipitator can be operated stably.

Also, in the desulfurizing apparatus for exhaust gas according to the present invention, since the exhaust gas exhausted from the combustion furnace is fed to a rotary type desulfurizing flue after its temperature was lowered in the gas/gas heater, desulfurization at a high efficiency can be effected by means of quick lime slurry.

Furthermore, the exhaust gas coming out of the rotary type desulfurizing flue is fed to the dust precipitator under a condition where its temperature was raised by heat-exchange, with the exhaust gas exhausted from the combustion furnace in the gas/gas heater, and so, the dust precipitator can be operated stably without generating occurrence of a sticky condition.

Moreover, quick lime particles of the ash collected in the dust precipitator are ground in the wet type grinding section of the rotary type desulfurizing flue, hence $CaSO_4$ existing at their surfaces is removed, and thus quick lime slurry having a raised desulfurizing capability can be obtained.

Still further, in the gas/liquid desulfurizing section of the rotary type desulfurizing flue, since efficient gas/liquid contact is effected between the quick lime slurry and the exhaust gas, and since the quick lime slurry has its desulfurizing capability raised as described above, efficient desulfurization of exhaust gas can be effected.

In addition, in the desulfurizing method for exhaust gas according to the present invention, calcium sulfite ($CaSO_3$) acting as publicly harmful substance would not be produced, only an amount less than a limited value thereof is exhausted to the outside of the system, hence treatment for preventing public pollution in the subsequent step of the process is unnecessary, and so, a cost can be reduced.

## Claims

1. An apparatus for desulfurizing exhaust gas, comprising a combustion furnace (10) in which desulfurization of combustion gas is carried out by making use of limestone (12) as a desulfurizing agent, and desulfurization of exhaust gas exhausted from the combustion furnace (10) is effected in a desulfurizing flue (70) on the upstream side of a dust precipitator (30) by means of slurry of unreacted quick lime contained in said exhaust gas and collected by the dust precipitator (30); characterized in that said desulfurizing flue (70) is constituted of a rotary type desulfurizing flue including a wet type grinding section (101) for grinding, under addition of water, unreacted quick lime collected by the dust precipitator (30) whereby calcium sulfate is removed from the calcium oxide particles, and then a quick lime slurry is formed, and a gas/liquid desulfurizing section (102) making use of said quick lime slurry, and there are provided a gas/gas heater (60), to which exhaust gas fed from said desulfurizing flue (70) to said dust precipitator (30) and exhaust gas fed from said combustion furnace (10) to said desulfurizing flue (70) are introduced, so that heat-exchange may be effected between the respective exhaust gases, and a flue evaporator (80) downstream of the heater (60), in which part of the slurry exhausted from the desulfurizing flue (70) is evaporated using exhaust gas heat-exchanged in the heater (60).

## Patentansprüche

1. Vorrichtung zum Entschwefeln von Abgas, umfassend einen Verbrennungsofen (10), in welchem eine Entschwefelung von Verbrennungsgas unter Verwendung von Kalkstein (12) als Entschwefelungsmittel durchgeführt und eine Entschwefelung des aus dem Verbrennungsofen (10) entlassenen Abgases in einem einem Staubabscheider (30) vorgeschalteten Entschwefelungskamin (70) mittels einer Aufschlämmung von im Abgas enthaltenem und durch den Staubabscheider (30) gesammeltem, nichtumgesetztem ungelöschten Kalk herbeigeführt wird, dadurch gekennzeichnet, daß der Entschwefelungskamin (70) durch einen Rotationstyp-Entschwefelungskamin mit einer Naßmahlsektion (101) zum unter Zugabe von Wasser erfolgenden Mahlen des durch den Staubabscheider (30) gesammelten, nichtumgesetzten ungelöschten Kalks, so daß den Calciumoxidteilchen Calciumsulfat entzogen wird, worauf eine Aufschlämmung ungelöschen Kalks gebildet wird, und eine die Aufschlämmung ungelöschten Kalks verwendende Gas/Flüssigkeits-Entschwefelungssektion (102) gebildet ist, und daß ein Gas/Gasheizgerät (60), in das vom Entschwefelungskamin (70) zum Staubabscheider (30) zugeführtes Abgas und vom Verbrennungsofen (10) zum Entschwefelungskamin (70) zugeführtes Abgas eingeführt werden, so daß ein Wärmeaustausch zwischen den jeweiligen Abgasen stattfinden kann, und ein dem Heizgerät (60) nachgeschalteter Kaminverdampfer (80), in welchem ein Teil der aus dem Entschwefelungskamin (70) abgeführten Aufschlämmung unter Verwendung des im Heizgerät (60) einem Wärmeaustausch unterworfenen Abgases verdampft wird, vorgesehen sind.

## Revendications

1. Appareil pour désulfurer les gaz d'échappement comprenant un four de combustion (10) dans lequel la désulfuration des gaz de combustion s'effectue en utilisant du calcaire (12) comme agent de désulfuration et la désulfuration des gaz sortant du four de combustion (10) se fait dans une conduite de désulfuration (70) en amont d'un séparateur de poussières (30) au moyen d'une pâte épaisse de chaux vive n'ayant pas réagi et contenue dans ledit gaz sortant et recueillie par ledit séparateur de poussières (30); caractérisé en ce que ladite conduite de désulfuration (70) est constituée d'une conduite de désulfuration d'un type rotatif comprenant une section de broyage humide (101) pour broyer en ajoutant de l'eau à la chaux vive n'ayant par réagi recueillie dans le séparateur de poussières (30), ce qui permet de séparer les particules de sulfate de calcium des particules d'oxyde de calcium et ensuite de former une pâte épaisse de chaux vive, ainsi qu'une section de désulfuration gaz/liquide (102) utilisant ladite pâte épaisse de chaux vive, et en ce qu'un dispositif de chauffage gaz/gaz (60) est prévu, lequel est alimenté avec le gaz sortant de ladite conduite de désulfuration (70) et allant audit séparateur de poussières (30) et le gaz sortant dudit four de combustion (10) et allant à ladite conduite de désulfuration (70), de sorte que l'on peut effectuer un échange thermique entre les gaz sortants respectifs, ainsi qu'un évaporateur tubulaire (80) en aval du dispositif de chauffage (60) dans lequel une partie de la pâte épaisse sortant de la conduite de désulfuration (70) est évaporée en utilisant les gaz de sortie ayant subi un échange thermique dans le dispositif de chauffage (60).

Fig. 1

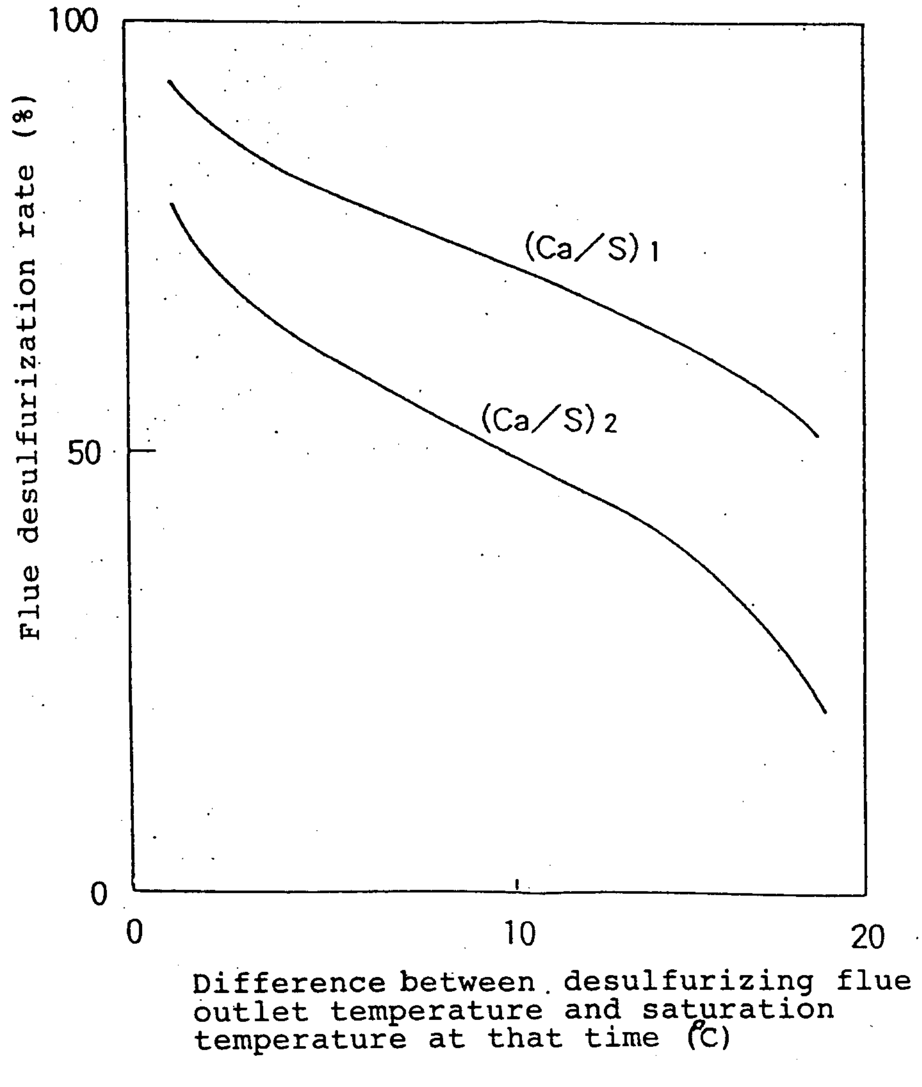
100
50
0
Flue desulfurization rate (%)
(Ca/S) 1
(Ca/S) 2
0
10
20
Difference between desulfurizing flue outlet temperature and saturation temperature at that time (°C)

Fig. 2

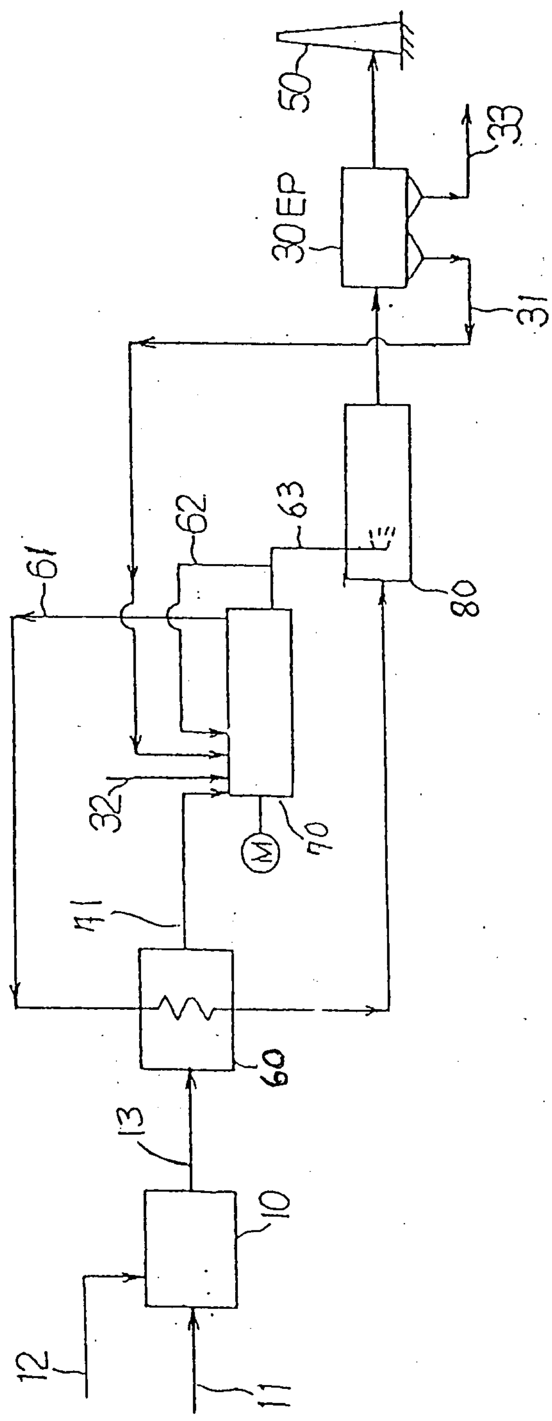

Fig. 3

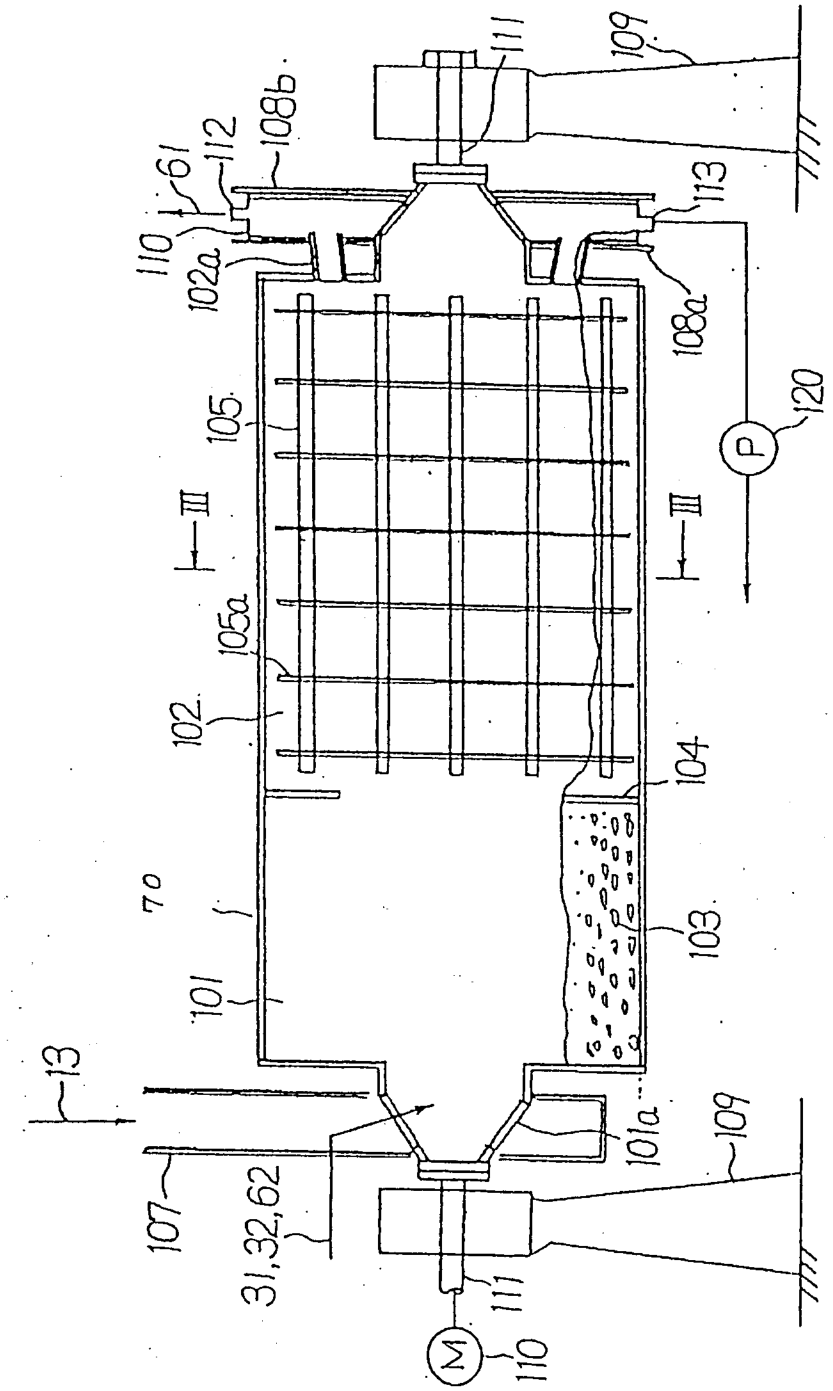

13
107
31,32,62
111
110
M
101
70
101a
109
103
104
102
105a
III
105
102a
110
61
112
108b
111
109
113
108a
120
P

Fig. 4

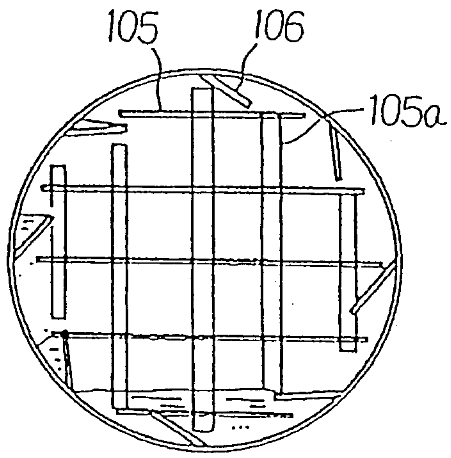


Fig.5

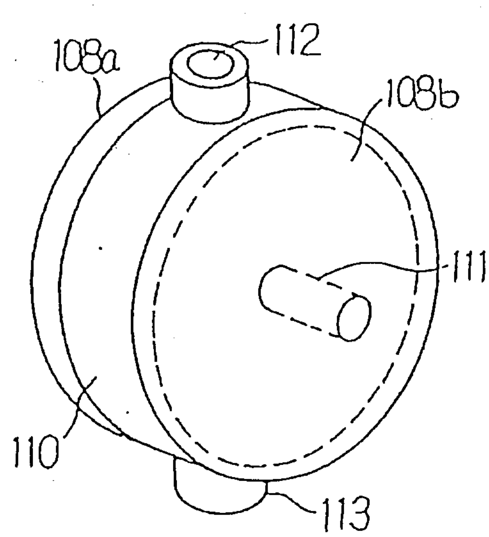

Fig. 6

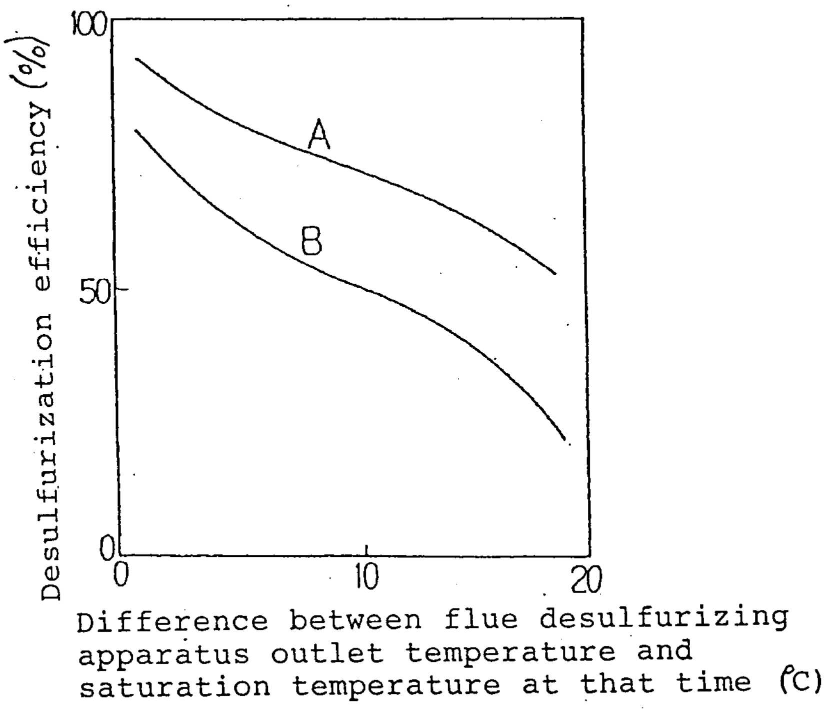
100
50
0
0
10
20
A
B
Desulfurization efficiency (%)
Difference between flue desulfurizing apparatus outlet temperature and saturation temperature at that time (°C)

Fig. 7 (Prior Art)